# EUROPÄISCHE PATENTANMELDUNG

(11) **EP 4 477 496 A1**
(43) Veröffentlichungstag der Anmeldung: **18.12.2024**
(21) Anmeldenummer: 24178935.3
(22) Anmeldetag: 29.05.2024
(51) Int. Cl.: B62D 5/065, B62D 5/04

(54) **VERFAHREN UND STEUEREINHEIT ZUM BETREIBEN EINER LENKUNGSEINHEIT FÜR EIN NUTZFAHRZEUG**

(30) Priorität: 15.06.2023 DE 102023115676
(71) Anmelder: KNORR-BREMSE Systeme für Nutzfahrzeuge GmbH, 80809 München (DE)
(72) Erfinder: SALEME, Ahmed, 80809 München (DE)

(57) **Zusammenfassung**

Der hier vorgestellte Ansatz schafft ein Verfahren 400 zum Betreiben einer Lenkungseinheit 150 für ein Nutzfahrzeug 100, Das Verfahren 400 umfasst einen Schritt des Versetzens 410 oder Betreiben einer Reglereinheit 145 der Lenkungseinheit 150 des Nutzfahrzeugs 100 in einem inaktiven Betriebsmodus, wenn erkannt wird, dass ein Fahrer 105 keine Lenkanforderung vorgibt und wenn eine Fahrzeuggeschwindigkeit v des Nutzfahrzeugs 100 geringer als ein vordefinierter Schwellwert ist. Ferner umfasst das Verfahren 400 einen Schritt des Aktivierens 420 der Reglereinheit 145 der Lenkungseinheit 150 in einem aktiven Betriebsmodus, wenn erkannt wird, dass der Fahrer 105 eine Lenkanforderung vorgibt oder wenn eine Fahrzeuggeschwindigkeit v des Nutzfahrzeugs 100 den vordefinierten Schwellwert überschreitet.

## Beschreibung

Der vorliegende Ansatz bezieht sich auf ein Verfahren und eine Steuereinheit zum Betreiben einer Lenkungseinheit für ein Nutzfahrzeug.

In Nutzfahrzeugen wird zur Unterstützung der Lenkfunktion oftmals eine hydraulische Lenkungseinheit eingesetzt, um Lenkanforderungen des Fahrers in eine konkrete Auslenkung der Räder umzusetzen. Hierbei wird meist ein Positionsregler oder Sensor eingesetzt, der eine Position oder Auslenkung der Lenksäule in ein Signal übersetzt, dass entsprechend der Soll-Lenkwinkel-Position an der Lenksäule in ein gewünschtes Lenkmoment übersetzt wird. Allerdings werden durch Störungen oder allgemein durch Rauschen auch bei beispielsweise einem stehenden Fahrzeug oder einer fehlenden Lenkanforderung durch den Fahrer Sensorsignale eines solchen Sensors ausgegeben, die dazu führen, dass eine entsprechende Reglereinheit dieser Lenkungseinheit fortwährend versucht, diese durch Störungen oder Rauschen verursachten Signalschwankungen auszugleichen. Dies wiederum führt zu einem ständigen aktiven Betrieb der Reglereinheit, sodass einerseits die Reglereinheit selbst und andererseits auch eine von der Reglereinheit angesteuerte Hydraulikpumpe unnötig Energie verbraucht. Zusätzlich wird das durch die Hydraulikpumpe geförderte Hydrauliköl speziell durch die nicht bewegten und somit nahezu nicht lenkbaren Räder unnötigerweise erhitzt, sodass es einerseits früher verschleißt und es andererseits möglicherweise durch eine Überhitzung auch zu einer Fehlfunktion der Lenkungseinheit kommen kann.

Vor diesem Hintergrund ist es die Aufgabe des vorliegenden Ansatzes ein verbessertes Verfahren zum Betreiben einer Lenkungseinheit für ein Nutzfahrzeug, eine verbesserte Steuereinheit zum Betreiben einer Lenkungseinheit für ein Nutzfahrzeug sowie ein verbessertes Nutzfahrzeug zu schaffen.

Der hier vorgestellte Ansatz schafft ein Verfahren zum Betreiben einer Lenkungseinheit für ein Nutzfahrzeug, wobei das Verfahren die folgenden Schritte aufweist:
- Versetzen oder Betreiben einer Reglereinheit der Lenkungseinheit des Nutzfahrzeugs in einem inaktiven Betriebsmodus, wenn erkannt wird, dass der Fahrer keine Lenkanforderung vorgibt und wenn eine Fahrzeuggeschwindigkeit des Nutzfahrzeugs geringer als ein vordefinierter Schwellwert ist; und
- Aktivieren der Reglereinheit der Lenkungseinheit in einen aktiven Betriebsmodus, wenn erkannt wird, dass der Fahrer eine Lenkanforderung vorgibt oder wenn eine Fahrzeuggeschwindigkeit des Nutzfahrzeugs den vordefinierten Schwellwert überschreitet.

Unter einem Nutzfahrzeug kann vorliegend ein Fahrzeug zur Beförderung von Gütern oder mehreren Personen oder zur Verrichtung von Arbeiten, speziell ein Lastkraftwagen, ein Omnibus oder allgemein eine Arbeitsmaschine wie beispielsweise ein Traktor oder ein Mähdrescher oder dergleichen verstanden werden. Unter einer Lenkungseinheit kann vorliegend eine Einheit verstanden werden, die manuelle Lenkeingaben vom Fahrer des Nutzfahrzeugs beispielsweise über ein Lenkrad aufnehmen, mechanisch, hydraulisch oder elektrisch verstärkten und an eine Bewegungseinheit ausgeben kann, um Räder dieses Nutzfahrzeug in einen gewünschten Lenkwinkel auszulenken. Unter einer Reglereinheit kann vorliegend eine Einheit verstanden werden, welches Eingangssignale in einer physikalischen Größe einlesen kann, die die manuelle Lenkeingabe des Fahrers repräsentiert und die als Ausgangssignal ein Ansteuersignal für die Bewegungseinheit bereitstellen kann. Beispielsweise kann die Lenkeingabe durch ein Drehen des Lenkrades erfolgen, sodass die physikalische Größe als ein Drehwinkel des Lenkrads oder ein am Lenkrad eingebrachtes Drehmoment eingelesen werden kann. Die Reglereinheit kann hierbei beispielsweise als PID-Regler realisiert oder implementiert sein.

Der hier vorgeschlagene Ansatz basiert auf der Erkenntnis, dass eine Lenkungsregelung eines Nutzfahrzeugs meist nicht erforderlich ist, wenn sich einerseits das Fahrzeug im Stillstand befindet oder nur mit sehr geringer Geschwindigkeit fährt und andererseits auch keine aktive Lenkeingabe durch den Fahrer erfasst wird. In diesem Fall kann davon ausgegangen werden, dass Signalschwankungen eines Signals von einem Sensor, der die Lenkeingabe des Fahrers erfassen soll, durch ein Rauschen oder durch andere Störungen verursacht ist, sodass eine Ausregelung dieser Signalschwankungen für den Fahrbetrieb des Nutzfahrzeugs nicht relevant ist und somit unterbleiben kann.

Von Vorteil ist der hier vorgeschlagene Ansatz speziell dadurch, dass einerseits ein unnötiger Energieaufwand für eine nicht benötigte Lenkungsregelung entfallen kann und andererseits die Lenkungseinheit einen geringeren Verschleiß und eine erhöhte Funktionssicherheit aufweist.

Gemäß einer besonderen Ausführungsform des hier vorgeschlagenen Ansatzes kann im Schritt des Aktivierens die Reglereinheit verzögert und/oder mit einem gewichteten, insbesondere zeitlich gewichteten Reglerausgangssignal aktiviert werden. Beispielsweise kann ein Ausgangssignal dieser Reglereinheit mit einem Faktor, beispielsweise auch einem zeitlich veränderlichen Faktor gewichtet werden, sodass eine sanfte und kontinuierlich Ansteuerung des Bewegungselementes zur Auslenkung der Räder des Nutzfahrzeugs erreicht werden kann. Eine solche Ausführungsform bietet den Vorteil, hohe Druckschwankungen im Hydraulikkreis der Lenkungseinheit zu vermeiden und hierdurch ebenfalls einen unnötigen Verschleiß der Lenkungseinheit zu reduzieren.

Besonders vorteilhaft ist eine Ausführungsform des hier vorgeschlagenen Ansatzes, bei der das Reglerausgangssignal unter Verwendung einer linearen, quadratischen und/oder exponentiellen Funktion gewichtet und/oder verzögert wird. Eine solche Ausführungsform bietet den Vorteil einer technisch einfachen Umsetzung der Ausgabe des geglätteten oder kontinuierlichen Regelungssignals an die Bestimmungseinheit, ohne dass ein unnötiger zeitlicher Verzug bei der Ansteuerung der Auslenkung der Räder zu befürchten ist.

Denkbar ist weiterhin eine Ausführungsform des hier vorgeschlagenen Ansatzes, bei der im Schritt des Versetzens oder des Aktivierens als vordefinierter Schwellwert für Fahrzeuggeschwindigkeit ein Wert verwendet wird, der eine maximal eine Schrittgeschwindigkeit, insbesondere einen Wert von maximal 3 oder 5 Stundenkilometern repräsentiert. Eine solche Ausführungsform des hier vorgeschlagenen Ansatzes bietet den Vorteil, die Lenkungseinheit auch bei einer langsamen Fahrt des Nutzfahrzeugs aktiv zu halten, sodass ein Lenkeingriff des Fahrers auch einer solchen langsamen Fahrt zeitnah umgesetzt werden kann.

Besonders vorteilhaft ist eine Ausführungsform des hier vorgeschlagenen Ansatzes, bei der im Schritt des Versetzens und/oder Aktivierens als Reglereinheit ein PID-Regler angesteuert wird. Vorteilhafterweise lässt sich mit einer solchen Ausführungsform eine schnelle und präzise Ansteuerung des gewünschten Auslenkungswinkels der Räder realisieren.

Ferner kann gemäß einer anderen Ausführungsform des hier vorgeschlagenen Ansatzes im Schritt des Versetzens und/oder des Aktivierens die Reglereinheit derart angesteuert werden, dass durch eine den Regler geregelte physikalische Größe einen maximalen Wert nicht überschreitet und/oder unterschreitet. Beispielsweise kann eine solche geregelte physikalische Größe ein Druck einer Hydraulikflüssigkeit der Lenkungseinheit oder eine Drehzahl einer Pumpe der Lenkungseinheit sein. Eine solche Ausführungsform bietet den Vorteil einen zu steilen Anstieg oder Abfall des Drucks der Hydraulikflüssigkeit in der Lenkungseinheit und hierdurch bewirkte abrupte Lenkbewegungen oder Bewegungen eines Lenkrads zu vermeiden.

Weiterhin kann auch im Schritt des Versetzens und/oder Aktivierens eine Reglereinheit eines hydraulischen Lenkungssystems, insbesondere durch die Reglereinheit eine Hydraulikpumpe des hydraulischen Lenkungssystems angesteuert werden. Eine solche Ausführungsform bietet den Vorteil, oftmals bereits vorhandene Komponenten der Lenkungseinheit technisch einfach und vorteilhaft ansteuern zu können, um die vorstehend genannte Aufgabe zu lösen.

Auch kann gemäß einer weiteren Ausführungsform des hier vorgeschlagenen Ansatzes im Schritt des Versetzens der Reglereinheit der Lenkungseinheit des Nutzfahrzeugs von dem aktiven in den inaktiven Betriebsmodus die Reglereinheit derart angesteuert werden, dass ein Druckabfall in einem Hydraulikkreis der Lenkungseinheit einen vordefinierten Gradientenschwellwert nicht unterschreitet und/oder im Schritt des Aktivierens der Reglereinheit der Lenkungseinheit des Nutzfahrzeugs von dem inaktiven in den aktiven Betriebsmodus die Reglereinheit derart angesteuert werden, dass ein Druckanstieg in einem Hydraulikkreis der Lenkungseinheit einen vordefinierten Gradientenschwellwert nicht überschreitet. Unter einem Gradientenschwellwert kann ein Parameter verstanden werden, der eine maximale (positive oder negative) Steigung abbildet, den ein Druck im Hydraulikkreis der Lenkungseinheit aufweisen soll. Eine solche Ausführungsform bietet den Vorteil keine Druckspitzen im Hydrauliksystem der Lenkungseinheit zu bewirken und somit einen Verschleiß der Lenkungseinheit sowie eine Gefahr durch abrupte Bewegungen von Komponenten der Lenkungseinheit möglichst zu minimieren.

Weiterhin kann gemäß einer anderen Ausführungsform des hier vorgeschlagenen Ansatzes im Schritt des Versetzens die Reglereinheit der Lenkungseinheit unter Verwendung eines Bremssignals angesteuert werden, das einen Aktivierungszustand einer Handbremse oder Parkbremse repräsentiert. Eine solche Ausführungsform bietet den Vorteil, dass bei einer aktivierten Handbremse oder Parkbremse zu erwarten ist, dass das Fahrzeug keine Lenkbewegungen ausführen braucht, sodass in einem solchen aktivierten Zustand der Handbremse oder Parkbremse auch die Lenkungseinheit in einen inaktivierten Zustand gebracht werden kann.

Varianten dieses Verfahrens können beispielsweise in Software oder Hardware oder in einer Mischform aus Software und Hardware beispielsweise in einer Steuereinheit implementiert sein.

Der hier vorgestellte Ansatz schafft ferner eine Steuereinheit, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Steuereinheit kann die der Erfindung zugrunde liegende Aufgabe schnell und effizient gelöst werden.

Hierzu kann die Steuereinheit zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Steuereinheit kann vorliegend ein elektrisches Gerät verstanden werden, das Sensorsignale verarbeitet und in Abhängigkeit davon Steuer- und/oder Datensignale ausgibt. Die Steuereinheit kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Steuereinheit beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Vorteilhafte Ausführungsbeispiele werden anhand der nachfolgenden Figuren beispielhaft erläutert. Es zeigen:
- Fig. 1: eine schematische Darstellung eines Nutzfahrzeugs;
- Fig. 2: eine schematische Darstellung eines Schaltdiagramms für die Realisierung der hier vorgestellten Vorgehensweise;
- Fig. 3: ein Diagramm einer schematischen Vorgehensweise für die Gewichtung oder Verzögerung der Aktivierung bzw. Deaktivierung der Reglereinheit; und
- Fig. 4: ein Ablaufdiagramm eines Verfahrens zum Betreiben einer Lenkungseinheit für ein Nutzfahrzeug.

Gleiche oder ähnlich wirkende Elemente werden in der nachfolgenden Beschreibung durch gleiche oder ähnliche Bezugszeichen versehen, wobei auf eine wiederholte Beschreibung aus Gründen der Übersichtlichkeit verzichtet wurde.

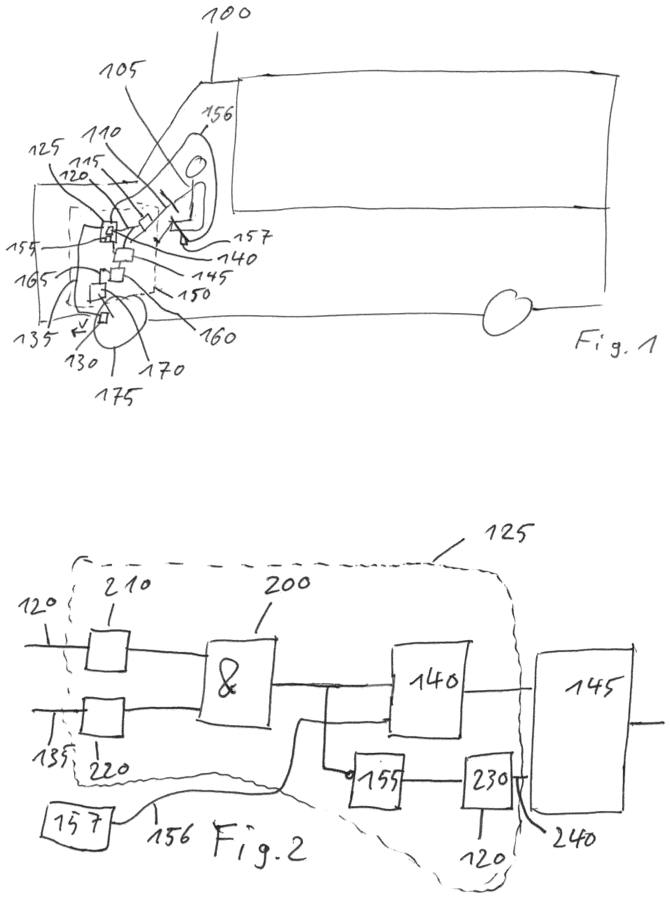

Figur 1 zeigt eine schematische Darstellung eines Nutzfahrzeugs 100. Das Nutzfahrzeug 100 wird hierbei beispielsweise durch einen Fahrer 105 mittels eines Lenkrads 110 gesteuert. Wenn der Fahrer 105 das Lenkrad 110 dreht und hierdurch eine Lenkanforderung vorgab kann eine solche Drehung oder ein solches Drehmoments durch einen Sensor 115 an der Lenksäule erfasst und entsprechendes Sensorsignal 120 gewandelt werden, welches einer Steuereinheit 125 zugeführt wird. Weiterhin kann über einen Bewegungssensor 130, der eine Bewegung des Nutzfahrzeugs 100 erfassen kann, ein Bewegungssignal 135 ausgegeben werden, welches wiederum von der Steuereinheit 125 eingelesen wird. Der Steuereinheit 125 kann nun beispielsweise durch eine Versetzungseinheit 140 eine Reglereinheit 145 einer Lenkungseinheit 150 in einen inaktiven Betriebsmodus gesetzt werden, wenn erkannt wird, dass der Fahrer 105 keine Lenkanforderung über das Lenkrad 110 vorgibt und zugleich eine Fahrzeuggeschwindigkeit v des Fahrzeugs geringer als ein vordefinierte Schwellwert ist. Mittels einer Aktivierungseinheit 155 der Steuereinheit 125 kann dann beispielsweise die Reglereinheit 145 der Lenkungseinheit 150 in einen aktiven Zustand oder Betriebsmodus gesetzt werden, wenn erkannt wird, dass der Fahrer 105 eine Lenkanforderung vorgibt oder wenn eine Fahrzeuggeschwindigkeit v des Nutzfahrzeugs 100 den vordefinierten Schwellwert überschreitet. Denkbar ist auch, dass in der Versetzungseinheit 140 oder der Aktivierungseinheit 155 der Steuereinheit 125 ein Bremssignal 156 von einer Handbremse 157 berücksichtigt wird, wie es nachfolgend noch näher beschrieben ist.

Die Reglereinheit 145 kann dabei ohne Beschränkung der Allgemeinheit als PID-Regler ausgebildet sein, und auf der Basis des Sendesignals 120 beispielsweise eine Hydraulikpumpe 160 der Lenkungseinheit 150 ansteuern. Durch die Hydraulikpumpe 160 kann beispielsweise Druck in einem Hydraulikkreis 165 gesteuert besonders geregelt werden, wodurch beispielsweise ein Bewegungselement 170, dass beispielsweise als Hydraulikmotor ausgebildet ist, eine Auslenkung von Rädern 175 des Nutzfahrzeugs 100 bewirkt werden kann. Auf diese Weise kann das Nutzfahrzeug 100 entsprechend der Vorgabe des Fahrers gelenkt werden.

Wie vorstehend nun kurz beschrieben wurde, können Messfehler oder ein Rauschen beispielsweise im Sensorsignal 120 dazu führen, dass die Reglereinheit 145 im Stand der Technik permanent versucht, die Signalschwankungen des Sendesignals zu kompensieren. Hierdurch wird einerseits ein erhöhter Energieverbrauch durch den Betrieb der Reglereinheit 145 als auch beispielsweise der Hydraulikpumpe 160 oder des Bewegungselementes 165 als auch ein erhöhter Verschleiß oder eine Beeinträchtigung der Funktionsfähigkeit von Komponenten des Lenkungssystems 150, beispielsweise durch eine unnötige Erhöhung eines Drucks oder eine Temperatur der Hydraulikflüssigkeit verursacht.

Um nun diese Problematik zu beheben, schlägt der hier vorgestellte Ansatz eine deutliche Verbesserung vor. Speziell wird dabei davon ausgegangen, dass eine Lenkung des Nutzfahrzeugs dann meist nicht benötigt wird, wenn erstens vom Fahrer keine Lenkanforderung gestellt wird und zweitens auch das Fahrzeug sich in einer Ruhelage befindet oder zumindest eine sehr geringe Fahrzeuggeschwindigkeit aufweist. Für diesen Fall kann davon ausgegangen werden, dass die Signalschwankungen im Sensorsignal 120 durch Störungen oder durch ein Rauschen verursacht sind und somit keine aktive Regelung der Lenkbewegung durch die Reglereinheit 145 vorgenommen werden muss. Für diesen Fall kann dann die Reglereinheit 145 in den inaktiven Betriebsmodus gesetzt werden.

Wird jedoch entweder vom Fahrer 105 eine Lenkanforderung, beispielsweise durch ein Drehen des Lenkrads 110, vorgenommen oder fährt das Fahrzeug schneller, beispielsweise schneller als ein Schwellwert von drei oder fünf Stundenkilometern, kann davon ausgegangen werden, dass eine aktive Lenkung des Fahrzeugs erforderlich ist und somit die Reglereinheit 145 in den aktiven Betriebsmodus zusetzen ist. Auf diese Weise lässt sich schnell auf zeitkritische Lenkanforderungen des Fahrers 105 reagieren.

Fig. 2 zeigt eine schematische Darstellung eines Schaltdiagramms für die Realisierung der hier vorgestellten Vorgehensweise. Hierbei umfasst die Steuereinheit 125 beispielsweise ein UND-Verknüpfungseinheit 200, deren erster Eingang mit einem Ausgang eines Sensorsignalkomparators 210 und deren zweiter Eingang mit einem Ausgang eines Bewegungssignalkomparators 220 verbunden ist. Im Sensorsignalkomparator 210 wird überprüft, ob das Sensorsignal 120 über einem vorbestimmten Schwellwert liegt, der beispielsweise eine Grenze repräsentiert, ab der ein aktiv vom Fahrer auf das Lenkrad ausgeübtes Drehmoment oder einen bestimmten Lenkwinkel angibt, um den das Lenkrad vom Fahrer gedreht wurde. Der Bewegungssignalkomparator 220 ermittelt ob die Fahrzeuggeschwindigkeit des Nutzfahrzeug 100 größer oder gleich als ein vorbestimmten Schwellwert ist, beispielsweise größer oder gleich Schrittgeschwindigkeit bzw. 3 bis 5 Stundenkilometern ist. Sind beide Bedingungen erfüllt, wird von der UND-Verknüpfungseinheit 200 ein Inaktivierungssignal an die Versetzungseinheit 140 gegeben, welche dann ausgebildet ist, um die Reglereinheit 145 in den inaktiven Zustand zu versetzen, also dass die Reglereinheit 140 keine Regelung ausführt. Wenn jedoch eine der Bedingungen an den Eingängen der UND-Verknüpfungseinheit nicht erfüllt ist, wird die Aktivierungseinheit 155 angesteuert, durch die dann beispielswiese eine Anpassungseinheit 230 aktiviert wird, die beispielsweise eine zeitliche oder betragsmäßige Verzögerung oder Gewichtung einer Ausgabe eines die Reglereinheit 145 aktivierenden Reglersignals 240 vornimmt. Hierbei kann beispielsweise die Reglereinheit 145 innerhalb eines vordefinierten Zeitintervalls verzögert eingeschaltet werden oder das für die Regelung verwendete Sensorsignal 120 mit einer in dem Zeitintervall linear, quadratisch oder exponentiell Gewichtung versehen werden und dieses verzögerte oder gewichtete Sensorsignal als Eingangssignal der Reglereinheit 145 verwendet werden.

Denkbar ist auch, dass die Versetzungseinheit 140 auf das Bremssignals 156 der Park- oder Handbremse 157 anspricht, sodass beispielsweise die Reglereinheit 145 in einen inaktiven Zustand versetze wird, denn eine aktivierte Hand- oder Parkbremse erkannt wird. In diesem Fall kann ebenfalls davon ausgegangen werden, dass keine Regelung der Lenkung erforderlich ist.

Auch kann in einem weiteren Ausführungsbeispiel eine Deaktivierung der Reglereinheit 145 durch die Versetzungseinheit 140 mit einer zur Funktion der Anpassungseinheit 230 analogen, in der Fig. 2 jedoch aus Gründen der Übersichtlichkeit nicht dargestellten Einheit erfolgen, die ebenfalls eine verzögerte oder gewichtete Deaktivierung der Reglereinheit 145 ausführt.

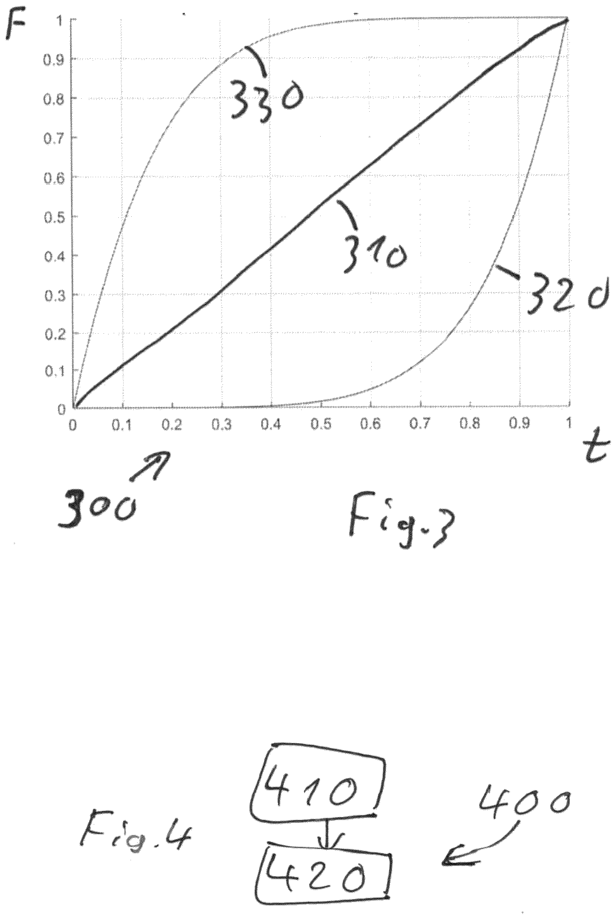

Fig. 3 zeigt ein Diagramm 300 einer schematischen Vorgehensweise für die Gewichtung oder Verzögerung der Aktivierung bzw. Deaktivierung der Reglereinheit 145. Auf der Abszisse des Diagramms 300 ist die Zeit t aufgetragen wogegen auf der Ordinate des Diagramms 300 ein Verstärkungsfaktor F wiedergegeben ist. In diesem Diagramm 300 ist eine Kennlinie 310 eines linearen Übergangs wiedergegeben, die eine zeitlich stetig zunehmende Verstärkung bzw. Gewichtung repräsentiert, sodass die Reglereinheit 145 innerhalb des normierten Zeitintervalls t mit einem linear zunehmenden Sensorsignals 120 beaufschlagt wird. Die Reglereinheit 145 kann jedoch auch mit einer exponentiellen Gewichtung, die durch die Kennlinie 320 oder einer logarithmischen Gewichtung, die durch die Kennlinie 330 wiedergegeben ist, angesteuert oder mit dem Sensorsignal 120 beaufschlagt werden. Es kann jedoch auch ein beliebiger Zusammenhang für die Verzögerung oder Gewichtung verwendet werden, je nachdem welchen Funktionszusammenhang ein Nutzer aktuell wünscht.

Fig. 4 zeigt ein Ablaufdiagramm eines Verfahrens 400 zum Betreiben einer Lenkungseinheit für ein Nutzfahrzeug. Das Verfahren 400 umfasst einen Schritt 410 des Versetzens oder Betreibens einer Reglereinheit der Lenkungseinheit des Nutzfahrzeugs in einem inaktiven Betriebsmodus, wenn erkannt wird, dass der Fahrer keine Lenkanforderung vorgibt und wenn eine Fahrzeuggeschwindigkeit des Nutzfahrzeugs geringer als ein vordefinierter Schwellwert ist. Ferner umfasst das Verfahren 400 einen Schritt 420 des Aktivierens der Reglereinheit der Lenkungseinheit in einen aktiven Betriebsmodus, wenn erkannt wird, dass der Fahrer eine Lenkanforderung vorgibt oder wenn eine Fahrzeuggeschwindigkeit des Nutzfahrzeugs den vordefinierten Schwellwert überschreitet.

Zusammenfassend ist anzumerken, dass mit dem hier vorgestellten Ansatz ein Einsatz eines quasi-adaptiven Reglers mit Stellgrößenbeschränkung vorgeschlagen wird. Das Fahrermoment und die Fahrzeuggeschwindigkeit werden als Anhaltpunkte für die Funktion in Betracht gezogen. Auch wird beispielsweise der Lenkungsregler (bzw. der PID-Regler) auf Standby gesetzt, wenn der Fahrer kein Drehmoment fordert und die Fahrzeuggeschwindigkeit klein ist. Sobald einer der beiden Bedingungen nicht mehr erfüllt ist oder beide, dann geht der Regler beispielsweise vom inaktiven zum aktiven Zustand über. Der Übergang von aktiven zum inaktiven Zustand erfolgt beispielsweise durch eine zeitliche lineare Funktion. Die Übergangsfunktion kann ebenfalls eine quadratische, sprich Parabel, eine Exponential-Funktion sein, je nach Kundenanforderung.

Als Regler-Parameter kann genannt werden, dass sich die einzelnen Regler-Parameter beispielsweise jeweils zwischen zwei verschiedenen Schranken bewegen. Die oberen Schranken bilden den Fall ab, in dem die Regler-Funktion aktiviert wird. Die unteren Schranken bilden den Fall ab, in dem die Regler-Funktion deaktiviert wird. Auch kann eine I-Anteil Limitierung bei einem PID-Regler vorgesehen sein, d. h. es kann eine Begrenzung des minimalen und/oder maximalen I-Anteils vorgesehen sein. Beispielsweise kann der I-Anteil (Integrator) zweimal limitiert und wenn nicht benötigt resettet werden. Die erste Limitierung des I-Anteils (also nicht der I-Parameter) erfolgt beispielsweise indirekt und wird charakterisiert durch Limitierung des maximalen und minimalen möglichen/erlaubten Drehmoments an dem Lenkungssystem (unter Beachtung der Funktionen, Degradationen usw.). So wird beispielsweise sichergestellt, dass der Regler kein all zu große (nicht erlaubte) Momente stellen kann. Diese Maßnahme ist eine Eigenschaft des Regelkonzepts.

Auch kann eine weitere I-Anteil-Limitierung erfolgen, wobei die erste Limitierung darin gesehen werden kann, dass die beiden maximalen und minimalen erlaubte Drehmomente ebenfalls analog zu den PID-Parametern variieren. Die jeweilige untere Schranke ist beispielsweise Null. Die zweite I-Anteil-Limitierung kann direkt durch Limitieren des I-Anteils des PID-Reglers mit Hilfe der zeitabhängigen Funktion erfolgen.

Auch kann eine PID-Limitierung vorgesehen sein, bei der zum Schluss die Stellgröße des Reglers ebenfalls durch die verwendete zeitabhängige Funktion limitiert wird. Auch kann ein Regler mit Vorsteuerung verwendet werden, bei dem das Regel-Konzept zusätzlich zum PID-Regler eine Vorsteuerung aufweist, welche dafür sorgt, dass der Regelfehler rapid abfällt. Dies bedeutet, dass die Reaktionszeit bzw. die Antwort des Systems auf dem Fahrerwunsch wird durch diese Funktion kaum beeinträchtigt wird, da die Vorsteuerungsanteil dadurch größer wird. Auch kann die Vorsteuerung proportional zum Fahrermoment und zur Fahrzeuggeschwindigkeit ausgestaltet sein.

Durch den hier vorgestellten Ansatz soll eine erhöhte und unnötige Stromaufnahme im Stillstand möglichst vermieden werden. Durch die Limitierung des Reglers wird keine Drehmomentanforderungen an dem Motor gestellt. Im Gegenteil dazu, wird ohne die eine Tyre-Relaxation-Funktion permanent ein Drehmoment durch die Positionsregelung (es wird die Position vom letzten Zyklus gehalten) und nicht vom Fahrermoment (gleich Null) angefordert.

Insbesondere kann der hier vorgestellte Ansatz einen Einfluss auf einen Öl-Druck und Lenkwinkel im Stillstand haben. Beim Loslassen des Lenkrades entsteht einen Druckausgleich in den beiden Arbeitsräumen. Im Mittelposition ist kein Pulsieren des Lenkwinkels und des Drucks vorhanden. Auch kann eine Elektromotor-Drehzahl eines Elektromotors der Hydraulikpumpe im Stillstand verringert werden. Sowohl im NullPosition des Lenkrads als auch in jeder beliebigen Position wird kein aktiver Betrieb dieses Motors angefordert, solange kein Fahrermoment vorliegt und die Fahrzeuggeschwindigkeit klein ist, dann wird kein Drehmoment an dem Motor angefordert.

Mit dem hier vorgestellten Ansatz können auch ein rapider oder unkontrollierter Druckabbau beim Abschalten der Lenkung vermieden werden. Beim Zündungswechsel geht beispielswiese das Bypass-Ventil ebenfalls in einen stromlosen Zustand, dadurch werden die beiden Arbeitsräume kurzgeschlossen. Dadurch erfolgt einen Druckausgleich in den beiden Arbeitsräumen. Das Lenkrad dreht sich in diesem Fall schnell bis sich der Druck in dem entsprechenden Arbeitsraum komplett abgebaut hat. Als Ergebnis wird eine unkontrollierte (nicht geregelte) schnelle Lenkraddrehung bewirkt. Eine Drehgeschwindigkeit hängt vom Druck ab und/oder evtl. Strom-Rückspeisung. Als Konsequenz ergeben sich Sicherheitsprobleme, durch die der Fahrer verletzt werden kann oder durch die sich Beschädigungen der mechanischen und der elektronischen Komponenten resultieren.

### BEZUGSZEICHENLISTE

- 100: Nutzfahrzeug
- 105: Fahrer
- 110: Lenkrad
- 115: Sensor
- 120: Sensorsignal
- 125: Steuereinheit
- 130: Bewegungssensor
- v: Fahrzeuggeschwindigkeit
- 135: Bewegungssignal
- 140: Versetzungseinheit
- 145: Reglereinheit
- 150: Lenkungseinheit
- 155: Aktivierungseinheit
- 156: Bremssignal
- 157: Handbremse
- 160: Hydraulikpumpe
- 165: Hydraulikkreis
- 170: Bewegungseinheit
- 175: Rad
- 200: UND-Verknüpfungseinheit
- 210: Sensorsignalkomparator
- 220: Bewegungssignalkomparator
- 230: Anpassungseinheit
- 240: Reglersignal
- 300: Diagramm
- 310: lineare Kennlinie
- 320: exponentielle Kennlinie
- 330: logarithmische Kennlinie
- 400: Verfahren zum Betreiben einer Lenkungseinheit für ein Nutzfahrzeug
- 410: Schritt des Versetzens
- 420: Schritt des Aktivierens

## Patentansprüche

1. Verfahren (400) zum Betreiben einer Lenkungseinheit (150) für ein Nutzfahrzeug (100), wobei das Verfahren (400) die folgenden Schritte aufweist:
- Versetzen (410) oder Betreiben einer Reglereinheit (145) der Lenkungseinheit (150) des Nutzfahrzeugs (100) in einem inaktiven Betriebsmodus, wenn erkannt wird, dass ein Fahrer (105) keine Lenkanforderung vorgibt und wenn eine Fahrzeuggeschwindigkeit (v) des Nutzfahrzeugs (100) geringer als ein vordefinierter Schwellwert ist; und
- Aktivieren (420) der Reglereinheit (145) der Lenkungseinheit (150) in einen aktiven Betriebsmodus, wenn erkannt wird, dass der Fahrer (105) eine Lenkanforderung vorgibt oder wenn eine Fahrzeuggeschwindigkeit (v) des Nutzfahrzeugs (100) den vordefinierten Schwellwert überschreitet.

2. Verfahren (400) gemäß Anspruch 1, **dadurch gekennzeichnet, dass** im Schritt (420) des Aktivierens die Reglereinheit (145) verzögert und/oder mit einem gewichteten, insbesondere zeitlich gewichteten Reglersignal (240) aktiviert wird.

3. Verfahren (400) gemäß Anspruch 2, **dadurch gekennzeichnet, dass** im Schritt (420) des Aktivierens das Reglersignal (240) unter Verwendung einer linearen, quadratischen und/oder exponentiellen Funktion gewichtet und/oder verzögert wird.

4. Verfahren (400) gemäß einen der vorangegangenen Ansprüche, **dadurch gekennzeichnet, dass** im Schritt (410) des Versetzens oder des Aktivierens als vordefinierter Schwellwert für die Fahrzeuggeschwindigkeit (v) ein Wert verwendet wird, der eine maximal eine Schrittgeschwindigkeit, insbesondere einen Wert von maximal 3 oder 5 Stundenkilometern repräsentiert.

5. Verfahren (400) gemäß einen der vorangegangenen Ansprüche, **dadurch gekennzeichnet, dass** im Schritt des Versetzens (410) und/oder Aktivierens (420) als Reglereinheit (145) ein PID-Regler angesteuert wird.

6. Verfahren (400) gemäß einen der vorangegangenen Ansprüche, **dadurch gekennzeichnet, dass** im Schritt (410) des Versetzens und/oder des Aktivierens (420) die Reglereinheit (145) derart angesteuert wird, durch eine die Reglereinheit (145) geregelte physikalische Größe einen maximalen Wert nicht überschreitet und/oder unterschreitet.

7. Verfahren (400) gemäß einen der vorangegangenen Ansprüche, **dadurch gekennzeichnet, dass** im Schritt des Versetzens (410) und/oder Aktivierens (420) eine Reglereinheit (145) eines hydraulischen Lenkungssystems (150), insbesondere durch die Reglereinheit (145) eine Hydraulikpumpe (160) des hydraulischen Lenkungssystems (150) angesteuert wird.

8. Verfahren (400) gemäß Anspruch 7, **dadurch gekennzeichnet, dass** im Schritt (410) des Versetzens der Reglereinheit (145) der Lenkungseinheit (150) des Nutzfahrzeugs (100) von dem aktiven in den inaktiven Betriebsmodus die Reglereinheit (150) derart angesteuert wird, dass ein Druckabfall in einem Hydraulikkreis (165) der Lenkungseinheit (150) einen vordefinierten Gradientenschwellwert nicht unterschreitet und/oder im Schritt (420) des Aktivierens der Reglereinheit (145) der Lenkungseinheit (150) des Nutzfahrzeugs (100) von dem inaktiven in den aktiven Betriebsmodus die Reglereinheit (145) derart angesteuert wird, dass ein Druckanstieg in einem Hydraulikkreis (165) der Lenkungseinheit (150) einen vordefinierten Gradientenschwellwert nicht überschreitet.

9. Verfahren (400) gemäß einen der vorangegangenen Ansprüche, **dadurch gekennzeichnet, dass** im Schritt (410) des Versetzens die Reglereinheit (145) der Lenkungseinheit (150) unter Verwendung eines Bremssignals (156) angesteuert wird, das einen aktivierten Zustand einer Handbremse (157) oder Parkbremse repräsentiert.

10. Steuereinheit (125), die eingerichtet ist, um die Schritte (410, 420) des Verfahrens (400) gemäß einem der vorangegangenen Ansprüche in entsprechenden Einheiten (140, 155) auszuführen und/oder anzusteuern.

11. Nutzfahrzeug (100) mit einer Steuereinheit (150) gemäß Anspruch 10.

12. Computerprogramm, das dazu eingerichtet ist, die Schritte (410, 420) des Verfahrens (400) gemäß einem der vorangegangenen Ansprüche auszuführen und/oder anzusteuern.

13. Maschinenlesbares Speichermedium, auf dem das Computerprogramm nach Anspruch 12 gespeichert ist.
